# EUROPÄISCHE PATENTSCHRIFT

(11) **EP 0 716 944 B1**
(45) Veröffentlichungstag und Bekanntmachung des Hinweises auf die Patenterteilung: **06.05.1998**
(21) Anmeldenummer: 95118354.0
(22) Anmeldetag: 22.11.1995
(51) Int. Cl.: B60G 17/056, B60G 17/08

(54) **Pneumatisches Federungsaggregat**
Pneumatic suspension gear
Organe de suspension pneumatique

(30) Priorität: 14.12.1994 DE 4444549
(43) Veröffentlichungstag der Anmeldung: 19.06.1996
(73) Patentinhaber: DAIMLER-BENZ AKTIENGESELLSCHAFT, 70567 Stuttgart (DE)
(72) Erfinder: Köster, Rolf, Dipl.-Ing., D-70329 Stuttgart (DE); Fischer, Jörg, Dipl.-Ing., D-73728 Esslingen (DE); Walterspiel, Stephan, Dipl.-Ing., D-76534 Baden-Baden (DE); Schildhorn, Bernd, Dipl.-Ing., D-76476 Bischweier (DE); Rohm, Erich, Dipl.-Ing., D-76597 Loffenau (DE)

(56) Entgegenhaltungen:
- EP-A- 0 215 315
- DE-A- 3 528 830
- DE-A- 3 619 402
- DE-A- 4 316 968
- GB-A- 2 151 746
- GB-A- 2 170 572

## Beschreibung

Die Erfindung betrifft ein pneumatisches Federungsaggregat, insbesondere für Kraftfahrzeuge, mit ihr Volumen federungshubabhängig ändernder Luftfederkammer und pneumatisch gesteuertem Schwingungsdämpfer, dessen pneumatischer Steuereingang mit der Luftfederkammer verbunden ist, wobei zwischen dem Steuereingang und der Luftfederkammer sowie einer Druckluftquelle oder Druckluftvorratskammer ein Umschaltventil angeordnet ist, in dessen einer Stellung der Steuereingang mit der Luftfederkammer und in dessen anderer Stellung der Steuereingang mit der Druckluftquelle oder Druckluftvorratskammer verbunden ist.

Pneumatische Federungssysteme werden bei Kraftfahrzeugen, insbesondere bei Lastkraftwagen, bereits relativ häufig eingesetzt. Bei diesen Systemen ist in der Regel eine Niveauregelung vorgesehen, welche es gestattet, das Fahrzeug nach Bedarf mit geringem Bodenabstand zu fahren, um beispielsweise die mögliche Ladehöhe zu vergrößern, oder den Bodenabstand auf höhere Werte einzustellen, um beispielsweise auf schlechten Straßen einen verbesserten Komfort oder eine besondere Schonung der Ladung zu ermöglichen.

In Verbindung mit pneumatischen Federungssystemen wurden auch bereits beladungsabhängig arbeitende Schwingungsdämpfer eingesetzt, wie die DE-OS 15 05 497 zeigt. Dabei handelt es sich um pneumatisch steuerbare Schwingungsdämpfer, deren pneumatischer Steuereingang mit einer Luftfederkammer des dem Schingungsdämpfer zugeordneten pneumatischen Federungsaggregates verbunden ist. Da der pneumatische Druck in der Luftfederkammer sich beladungsabhängig ändert, kann dieser Parameter grundsätzlich zur beladungsabhängigen Schwingungsdämpfersteuerung herangezogen werden.

Die DE 43 16 968 A1 zeigt nun ein Federungsaggregat der eingangs angegebenen Art. Dabei sind der Luftkammer Niveausteuerventile zugeordnet, mit denen die Luftfederkammer entlüftet oder mit der Druckluftquelle verbunden oder nach außen abgesperrt werden kann. Diese Niveausteuerventile sind mit einem Wechselventil kombiniert, welches normalerweise eine die Luftfederkammer mit dem pneumatischen Steuereingang des Schwingungsdämpfers verbindende Lage einnimmt. Um die Möglichkeit zu schaffen, den Druck am pneumatischen Steuereingang des Schwingungsdämpfers über den Druck in der Luftfederkammer anzuheben, sind die Niveausteuerventile in besonderer Weise ausgebildet bzw. angeordnet, derart, daß das in Abhängigkeit von Druckdifferenzen im pneumatischen System des Federaggregates seine Stellungen wechselnde Wechselventil seine normale Lage verläßt, wenn die Niveausteuerventile in eine für die Niveausteuerung nicht benötigte Schaltstellungskombination gebracht werden, in der die Druckluftquelle über ein Niveausteuerventil und das Wechselventil mit dem pneumatischen Steuereingang des Schwingungsdämpfers verbunden ist.

Im übrigen sind elektrisch steuerbare Schwingungsdämpfer grundsätzlich bekannt, welche sich mittels einer Elektronik steuern lassen, die eingangsseitig mit Sensoren zur Registrierung unterschiedlicher Parameter verbunden ist, beispielsweise mit Sensoren für die Aufbaubewegungen sowie weiteren Sensoren für den Beladungszustand des Fahrzeuges.

Aufgabe der Erfindung ist es nun, das Luftfederaggregat der eingangs angegebenen Art unter Verbesserung der Steuerung des Schwingungsdämpfers in konstruktiv vorteilhafter Weise auszugestalten.

Diese Aufgabe wird erfindungsgemäß dadurch gelöst, daß der Steuereingang bei geöffneter Verbindung zur Luftfederkammer durch eine in der absperrbaren Verbindung zwischen Luftfederkammer und Steuereingang angeordnete Drossel von schnellen dynamischen Druckschwankungen in der Luftfederkammer abgekoppelt ist.

Bei der Erfindung bleibt die Grundeinstellung des Schwingungsdämpfers bei gleichbleibenden Fahrbedingungen weitgehend konstant. Vorzugsweise ist parallel zur Drossel ein Rückschlagventil angeordnet, welches in Richtung der Luftfederkammer öffnet und - in besonders bevorzugter Weise - in Schließrichtung mit vorgegebener Kraft belastet ist. Bei dieser Anordnung kann der pneumatische Steuereingang des Stoßdämpfers nach einer Verbindung mit der pneumatischen Druckquelle bzw. Druckluftvorratskammer beim Übergang auf den Normalbetrieb, d.h. bei Verbindung des Steuereinganges mit der Luftfederkammer, schnell in die Luftfederkammer entlüftet werden, bis sich am pneumatischen Steuereingang ein einem Mittelwert des pneumatischen Druckes in der Luftfederkammer entsprechender pneumatischer Druck einstellt.

Soweit bei der genannten Entlüftung des pneumatischen Steuereinganges und der damit einhergehenden Zufuhr von Druckluft in die Luftfederkammer eine (geringfügige) Erhöhung des Bodenabstandes des Fahrzeuges auftreten sollte, wird diese Änderung durch die der Luftfederung regelmäßig zugeordnete Niveauregulierung ausgeglichen.

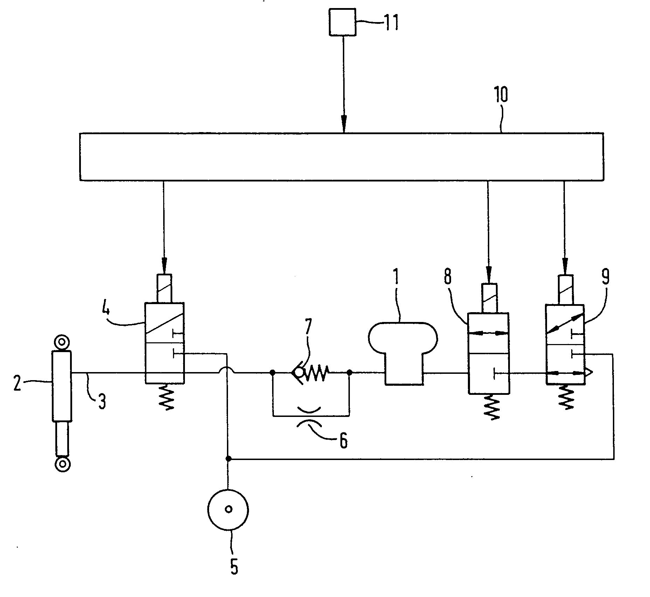

Im übrigen wird hinsichtlich bevorzugter Merkmale der Erfindung auf die Ansprüche sowie die nachfolgende Beschreibung einer besonders bevorzugten Ausführungsform verwiesen, die anhand der Zeichnung erläutert wird.

Dabei zeigt die einzige Figur eine schaltplanartige Darstellung eines erfindungsgemäßen Federaggregates.

Zwischen einem nicht dargestellten Chassis eines ebenfalls nicht dargestellten Kraftfahrzeuges und einer nicht dargestellten Fahrzeugachse ist in grundsätzlich bekannter Weise ein Luftfederbalg 1 und parallel dazu ein pneumatisch steuerbarer Stoßdämpfer 2 angeordnet.

Der Stoßdämpfer 2 besitzt einen pneumatischen Steuereingang 3, welcher mittels eines Steuerventiles 4, das nach Art eines 3/2-Wegeventiles ausgebildet ist, entweder mit dem Innenraum des Luftfederbalges 1 oder mit einer Druckluftvorratskammer 5 oder einer sonstigen pneumatischen Druckquelle verbindbar ist.

In der Pneumatikleitung zwischen Steuerventil 4 und Luftfederbalg 1 sind eine Drossel 6 und parallel dazu ein mittels Feder schließend belastetes Rückschlagventil 7 angeordnet, welches nur in Richtung zum Luftfederbalg 1 durchströmbar ist.

Im übrigen ist die Druckluftvorratskammer 5 mit dem Luftfederbalg 1 über Niveausteuerventile 8 und 9 verbunden, welche die Möglichkeit bieten, den Luftfederbalg 1 zur Entlüftung mit der Atmosphäre oder zur Einführung von Druckluft mit der Druckluftvorratskammer 5 zu verbinden bzw. nach außen abzuschließen.

Die Ventile 4,8 und 9 werden normalerweise durch Rückstellfedern od.dgl. in den dargestellten Schaltstellungen gehalten, in denen der Luftfederbalg 1 mit dem Steuereingang 3 des Stoßdämpfers verbunden und im übrigen sowohl zur Atmosphäre als auch zur Druckluftvorratskammer 5 hin abgesperrt ist.

Mittels einer elektronischen Steuerschaltung 10 können die genannten Ventile 4,8 und 9 umgesteuert werden, und zwar in Abhängigkeit von eingangsseitig der Steuerschaltung 10 angeschlossenen Sensoren 11, die beispielsweise den Abstand zwischen Achsen und Aufbau registrieren und aus deren Signalen dementsprechend auch die jeweilige Bewegung der Achse relativ zum Aufbau nach Richtung und Geschwindigkeit ermittelbar ist.

Soweit die Elektronik "bemerkt", daß sich der Abstand zwischen den Achsen und dem Fahrzeugaufbau gegenüber einem Sollwert übermäßig ändert, werden die Niveausteuerventile 8 und 9 angesteuert, um den genannten Abstand zu vergrößern oder zu vermindern, indem der Luftfederbalg 1 entweder mit der Druckluftvorratskammer 5 oder der Atmosphäre kurzzeitig verbunden wird.

Falls die Steuerschaltung 10 "feststellt", daß übermäßig heftige Achsbewegungen relativ zum Fahrzeugaufbau auftreten, weil z.B. die sogenannte Aufbauresonanz oder die sogenannte Achs- bzw. Radresonanz des Federungssystems angeregt werden, wird das Steuerventil 4 in die andere Lage umgeschaltet, um den Steuereingang 3 des Stoßdämpfers 2 auf hohen pneumatischen Druck zu bringen und den Stoßdämpfer 2 auf verstärkte Dämpfung einzustellen.

Sobald der kritische Fahrzustand nicht mehr vorliegt, läßt die Steuerschaltung 10 das Steuerventil 4 wieder in die Normalstellung umschalten, wobei sich der am Steuereingang 3 vorhandene pneumatische Druck über das Rückschlagventil 7 in kurzer Zeit unter Einleitung von Druckluft in den Luftfederbalg 1 abbaut. Soweit dabei der Luftfederbalg 1 übermäßig "aufgeblasen" wird und sich der Abstand zwischen Achse und Aufbau erhöht, betätigt die Steuerschaltung 10 die Niveausteuerventile 8 und 9, um Luft aus dem Luftfederbalg 1 abzulassen.

Der besondere Vorzug der erfindungsgemäßen Anordnung liegt darin, daß im Normalfall ständig eine von der Beladung des Fahrzeuges abhängige Einstellung des Stoßdämpfers 2 vorliegt, da der mittlere pneumatische Druck im Luftfederbalg 1 ein analoges Maß der Beladung darstellt. Gleichwohl sind zur Ermittlung des Beladungszustandes keinerlei Sensoren erforderlich. Für die Ermittlung kritischer Fahrzustände, bei denen der Stoßdämpfer 2 auf maximale Dämpfung eingestellt werden sollte, genügen für die Steuerung der Niveausteuerventile 8 und 9 ohnehin vorhandene Sensoren 11, welche auf die Hubstellung der Fahrzeugräder bzw. Achsen relativ zum Fahrzeugaufbau reagieren, wobei aus den Sensorsignalen - etwa durch Bildung von zeitlichen Differenzenquotienten - sowohl die jeweilige Bewegungsrichtung der Achsen relativ zum Aufbau als auch die Bewegungsgeschwindigkeiten bzw. die Beschleunigungen der Achsen ermittelbar sind. Dazu brauchen die Signale der Sensoren 11 von der Steuerschaltung 10 lediglich entsprechend ausgewertet zu werden.

## Patentansprüche

1. Pneumatisches Federungsaggregat, insbesondere für Kraftfahrzeuge, mit ihr Volumen federungshubabhängig ändernder Luftfederkammer (1) und pneumatisch gesteuertem Schwingungsdämpfer (2), dessen pneumatischer Steuereingang (3) mit der Luftfederkammer verbunden ist, wobei zwischen dem Steuereingang und der Luftfederkammer sowie einer Druckluftquelle oder Druckluftvorratskammer (5) ein Umschaltventil (4) angeordnet ist, in dessen einer Stellung der Steuereingang mit der Luftfederkammer und dessen anderer Stellung der Steuereingang mit der Druckluftquelle oder Druckluftvorratskammer verbunden ist,
**dadurch gekennzeichnet,**
daß der Steuereingang (3) bei geöffneter Verbindung zur Luftfederkammer (1) durch eine in der absperrbaren Verbindung zwischen Luftfederkammer (1) und Steuereingang (3) angeordnete Drossel (6) von schnellen dynamischen Druckschwankungen in der Luftfederkammer abgekoppelt ist.

2. Federungsaggregat nach Anspruch 1,
**dadurch gekennzeichnet,**
daß parallel zur Drossel (6) ein Rückschlagventil (7) angeordnet ist, welches in Richtung der Luftfederkammer (1) öffnet.

3. Federungsaggregat nach Anspruch 2,
**dadurch gekennzeichnet,**
daß das Rückschlagventil (7) mit vorgegebener Kraft in Schließrichtung belastet ist.

4. Federungsaggregat nach einem der Ansprüche 1 bis 3,
**dadurch gekennzeichnet,**
daß die Luftfederkammer (1) mittels Niveausteuerventile (8,9) entlüftbar oder mit einer Druckluftquelle oder Druckluftvorratskammer (5) verbindbar oder nach außen absperrbar ist.

5. Federungsaggregat nach einem der Ansprüche 1 bis 4,
**dadurch gekennzeichnet,**
daß zur Steuerung der Verbindung des Steuereinganges (3) mit der Luftfederkammer (1) und der Druckluftquelle oder Druckluftvorratskammer (5) sowie einer Niveausteuerung Signale von Sensoren (11) ausgewertet werden, die den Federungshub registrieren.

## Claims

1. A pneumatic suspension assembly, particularly for motor vehicles, with an air spring chamber (1) the volume of which varies as a function of the spring deflection, and with a pneumatically controlled vibration damper (2) the pneumatic control input (3) of which is connected to the air spring chamber, there being between the control input and the air spring chamber as well as a compressed air source or compressed air supply chamber (5), a switch-over valve (4) in one position of which the control input is connected to the air spring chamber while in its other position the control input is connected to the compressed air source or compressed air supply chamber, characterised in that when the connection to the air spring chamber (1) is opened, the control input (3) is isolated from rapid dynamic pressure fluctuations in the air spring chamber by a throttle (6) disposed in the occludable connection between air spring chamber (1) and control input (3).

2. A suspension assembly according to claim 1, characterised in that a non-return valve (7) which opens in the direction of the air spring chamber (1) is disposed parallel with the throttle (6).

3. A suspension assembly according to claim 2, characterised in that the non-return valve (7) is biased in the direction of closure by a predetermined force.

4. A suspension assembly according to one of claims 1 to 3, characterised in that the air spring chamber (1) can be vented by level control valves (8, 9) or can be connected to a compressed air source or compressed air supply chamber (5) or can be outwardly occluded.

5. A suspension assembly according to one of claims 1 to 4, characterised in that for controlling the connection of the control input (3) to the air spring chamber (1) and the compressed air source or compressed air supply chamber (5) as well as for level control, signals from sensors (11) are evaluated and register the spring travel.

## Revendications

1. Organe de suspension pneumatique, en particulier pour véhicules automobiles, comprenant une chambre de ressort pneumatique (1) changeant son volume en fonction de la course élastique et un amortisseur d'oscillations (2) piloté par voie pneumatique et dont l'entrée de pilotage pneumatique (3) est reliée à la chambre de ressort pneumatique, avec disposition d'une soupape de renversement (4) entre l'entrée de pilotage et la chambre de ressort pneumatique ainsi qu'une source d'air comprimé ou chambre d'air comprimé de réserve (5), soupape de renversement dans une position de laquelle l'entrée de pilotage est reliée à la chambre de ressort pneumatique et dans l'autre position de laquelle l'entrée de pilotage est reliée à la source d'air comprimé ou chambre d'air comprimé de réserve,
caractérisé en ce que l'entrée de pilotage (3) est découplée, lorsque la liaison avec la chambre de ressort pneumatique (1) est ouverte, de fluctuations de pression dynamiques rapides dans cette chambre par un étrangleur (6) disposé dans la liaison, pouvant être coupée, entre la chambre de ressort pneumatique (1) et l'entrée de pilotage (3).

2. Organe de suspension pneumatique selon la revendication 1, caractérisé en ce qu'une soupape antiretour (7), s'ouvrant en direction de la chambre de ressort pneumatique (1), est disposée en parallèle avec l'étrangleur (6).

3. Organe de suspension pneumatique selon la revendication 2, caractérisé en ce que la soupape antiretour (7) est chargée dans le sens de la fermeture par une force préfixée.

4. Organe de suspension pneumatique selon une des revendications 1 à 3, caractérisé en ce que la chambre de ressort pneumatique (1) peut être détendue, reliée à une source d'air comprimé ou chambre d'air comprimé de réserve (5) ou coupée de l'extérieur au moyen de soupapes de commande de niveau (8, 9).

5. Organe de suspension pneumatique selon une des revendications 1 à 4, caractérisé en ce que des signaux de capteurs (11) détectant le débattement de suspension sont exploités pour commander le raccordement de l'entrée de pilotage (3) à la chambre de ressort pneumatique (1) et son raccordement à la source d'air comprimé ou chambre d'air comprimé de réserve (5), ainsi que pour une commande de niveau.
